# EUROPÄISCHE PATENTSCHRIFT

(11) **EP 1 949 870 B1**
(45) Veröffentlichungstag und Bekanntmachung des Hinweises auf die Patenterteilung: **28.12.2011**
(21) Anmeldenummer: 07101150.6
(22) Anmeldetag: 25.01.2007
(51) Int. Cl.: A61C 19/10

(54) **Bereitstellungssystem für Zahnmuster**
Provisioning system for dental models
Système de mise à disposition d'échantillons dentaires

(43) Veröffentlichungstag der Anmeldung: 30.07.2008
(73) Patentinhaber: Vita Zahnfabrik H. Rauter GmbH & Co. KG, 79713 Bad Säckingen (DE)
(72) Erfinder: Thiel, Norbert, Dr., 79713, Bad Säckingen (DE); Albarski, Olivia, Dr., 5000, Aarau (CH)
(74) Vertreter: von Kreisler Selting Werner

(56) Entgegenhaltungen:
- EP-A1- 0 591 958
- US-A1- 2003 235 799

## Beschreibung

Die Erfindung betrifft ein Bereitstellungssystem für Zahnmuster zur Bestimmung der Helligkeit, des Chromas und des Farbtons von natürlichen und/oder gebleichten Zähnen.

Ein gattungsgemäßes System ist in den Dokumenten EP-A-0 591 958 und US-A-2003/0235799 offenbart.

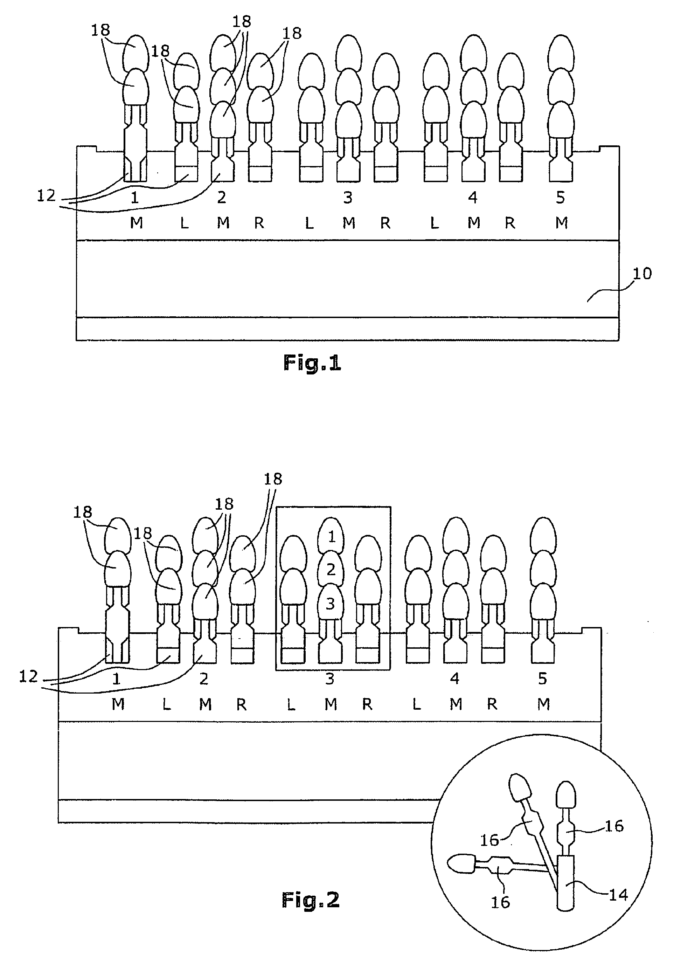

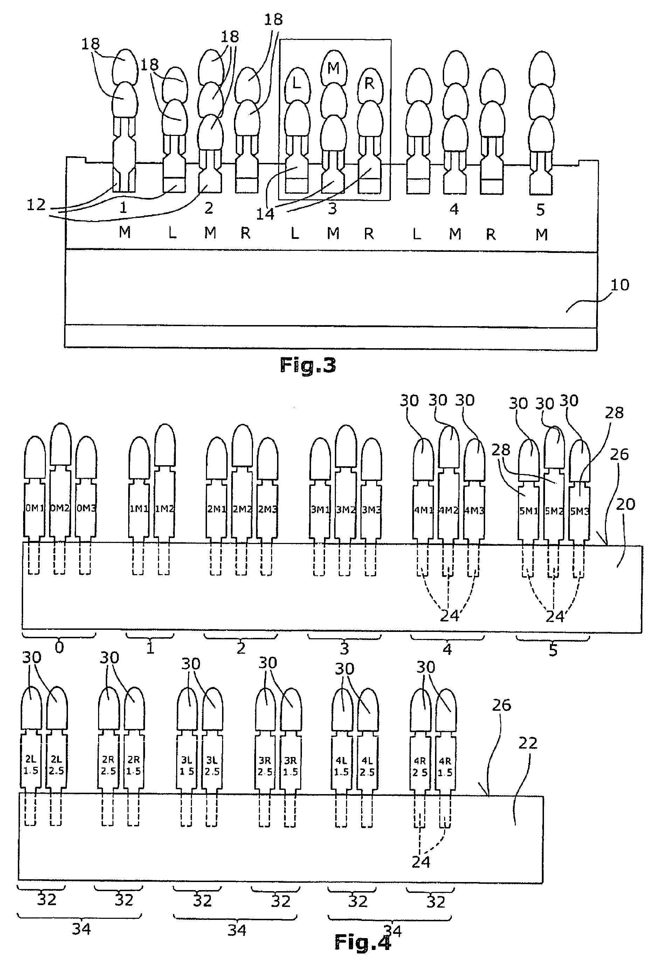

Basierend auf den in dem US-Patent US 5,498,157 beschriebenen Kriterien hinsichtlich der Helligkeit, des Chromas und des Farbtons bei menschlichen Zähnen, hat die Anmelderin ein Bereitstellungssystem für Zahnmuster mit der Bezeichnung VITA Toothguide 3D-Master entwickelt. Das Bereitstellungssystem 3D-Master Toothguide ist in den Fign. 1 - 3 dargestellt. In einem Aufnahmeelement 10 sind mehrere Steckfächer 12 vorgesehen, wobei in jedes Steckfach ein Muster 14 (Fig. 2) eingesteckt ist. Der Musterhalter 14 trägt zwei oder drei Musterstifte 16, die in dem Musterhalter 14 schwenkbar gehalten sind. Die Bestimmung der Helligkeit, des Chromas und des Farbtons erfolgt in drei Schritten, die in den Fign. 1, 2 und 3 dargestellt sind. Hierzu sind die einzelnen Zahnmuster 18 in Abhängigkeit ihrer Helligkeit, ihres Chromas und ihres Farbtons unterschiedlichen Gruppen zugeordnet. In den Gruppen 1 - 5 (Fig. 1) sind je Gruppe, Zahnmuster 18 zusammengefasst, die die gleiche Helligkeit aufweisen. Innerhalb der Gruppen 1 - 5 unterscheiden sich die Zahnmuster hinsichtlich des Chromas und des Farbtons. Innerhalb jeder einzelnen Gruppe sind, wie beispielsweise bei der in Fig, 2 markierten Gruppe 3, je Musterhafter 14, zwei oder drei Zahnmuster 18 mit identischem Farbton, aber unterscheidendern Chroma zusammengefasst. Jede Helligkeitsgruppe weist mit Ausnahme der beiden Randgruppen 1 und 5, drei Musterhalter auf. Diese unterscheiden sich dadurch, dass sie unterschiedliche Farbtöne haben. Der mittlere Musterhalter M hat einen mittleren Farbton, der mit L bezeichnete linke Musterhalter 14, hat einen etwas gelblicheren Farbton und der rechte mit R bezeichnete Musterhalter 4, hat einen etwas rötlicheren Farbton (Fig. 3).

Zur Bestimmung der Helligkeit, des Chromas und des Farbtons eines natürlichen oder gebleichten Zahnes, erfolgt in einem ersten Schritt die Bestimmung der Helligkeit (Fig, 1). Hier wird vom Zahnarzt oder Zahntechniker eine der Helligkeitsgruppen 1-5 ausgewählt. Nach Auswahl der Helligkeitsgruppe wird sodann innerhalb der Helligkeitsgruppe das Chroma (Fig. 2) ausgewählt. Dies erfolgt durch Herausziehen des mittleren Musterhalters 14 aus der entsprechenden Helligkeitsgruppe (Fig. 2). Anschließend werden die einzelnen Musterstifte verschwenkt, so dass die Zahnmuster neben die Zähne des Patienten zur Bestimmung des Chromas, das mit 1, 2 oder 3 bezeichnet ist, gehalten werden können. Im nächsten Schritt (Fig. 3) wird, ausgehend von einem mittleren Farbton M bestimmt, ob der Farbton des Zahns eher gelblich (L) oder rötlich (R) ist.

Obwohl mit dem VITA Toothguide 3D-Master eine sehr exakte Bestimmung der Helligkeit, des Chromas und des Farbtons eines Zahnes möglich ist, hat sich herausgestellt, dass die Handhabung schwierig ist. Beispielsweise ist es schwierig im ersten Schritt die Helligkeitsgruppe exakt zu bestimmen, wenn die zu bestimmende Zahnfarbe sehr chromatisch ist. Dies ist auf die Tatsache zurückzuführen, dass das menschliche Auge Helligkeit und Chroma nur begrenzt voneinander unterscheiden kann und miteinander kompensiert. So werden chromatische Farben als dunkler wallrgenommen. Dies kann dazu führen, dass im ersten Schritt eine falsche Helligkeitsstufe ausgewählt wird. Dieser Fehler kann in den folgenden Schritten nicht mehr korrigiert werden.

Aufgabe der Erfindung ist es, ein Bereitstellungssystem für Zahnmuster zur Bestimmung der Helligkeit, des Chromas und/ oder des Farbtons bereitzustellen, das einfach zu handhaben ist und mit hoher Zuverlässigkeit eine exakte Bestimmung der Helligkeit, des Chromas und/ oder des Farbtons ermöglicht.

Die Lösung der Aufgabe erfolgt durch ein Bereitstellungssystem gemäß Anspruch 1.

Ein wesentliches Element der Erfindung besteht in der Vereinfachung des Bereitstellungssystems. Dies wird dadurch erreicht, dass einzelne Aufnahmeelemente vorgesehen sind, in denen die einzelnen Zahnmuster ausschließlich linear angeordnet sind. Hierbei sind vorzugsweise nicht mehrere Musterstifte, die jeweils ein Zahnmuster tragen, mit einem Musterhalter, beispielsweise schwenkbar, entsprechend dem 3D-Master verbunden. Vielmehr erfolgt eine Auflösung der einzelnen Zahnmuster, die beispielsweise jeweils auf einem Musterstift befestigt sind. Erfindungsgemäß sind die Zahnmuster einzeln und nebeneinander, d. h. linear, einreihig angeordnet. Hierdurch ist die Übersichtlichkeit deutlich verbessert. Erfindungsgemäß weist das Bereitstellungssystem mehrere Aufnahmeelemente auf. Die einzelnen Aufnahmeelemente werden zur Bestimmung der Helligkeit, des Chromas und des Farbtons nacheinander verwendet. Dies hat zur Folge, dass die in einem Bestimmungsschritt zu berücksichtigende Anzahl an Zahnmustern deutlich reduziert ist.

Die in den Ansprüchen als, "erstes" und "zweites" bereichneten Aufnahmeelemente entsprechen dem "dritten" bw. "vierten" Aufnahmeelement in dieser Beschreibung.

Ein nicht-erfindungsgemäßes Ausführungsbeispiel des Bereitstellungssystems weist zwei Aufnahmeelemente auf. Ein erstes Aufnahmeelement weist nebeneinander mehrere Gruppen von Zahnmustern auf. Die in einer Gruppe angeordneten Zahnmuster weisen dieselbe Helligkeit und denselben Farbton, aber unterschiedliches Chroma auf. Mit Hilfe des ersten Aufnahmeelements ist es somit in einem ersten Schritt auf einfache Weise möglich, die Helligkeitsgruppe zu bestimmen. Dieses ist insbesondere mit der mittleren Chromastufe auf einfache Weise möglich, da jede Gruppe vorzugsweise maximal drei Zahnmuster aufweist. Nach der Bestimmung der Helligkeitsgruppe kann das Chroma innerhalb der entsprechenden Gruppe bestimmt werden. Zur Bestimmung des Farbtons ist sodann ein zweites Aufnahmeelement vorgesehen, das unabhängig vom ersten Aufnahmeelement verwendet werden kann. Das zweite Aufnahmeelement weist wiederum mehrere nebeneinander angeordnete Gruppen von Zahnmustern auf. Innerhalb jeder Gruppe weisen die Zahnmuster dieselbe Helligkeit, jedoch unterschiedliche Farbtöne auf. Ferner kann innerhalb der einzelnen Gruppen auch noch eine Feinabstufung des Chromas vorgesehen sein, Hierbei kann das zweite Aufnahmeelement je Helligkeitsstufe, zwei Gruppen aufweisen. Hierbei handelt es sich bei einer Gruppe um eher gelbliche und bei der anderen Gruppe um eher rötliche Farbtöne.

Da die einzelnen Zahnmuster, die insbesondere über Musterstifte gehalten sind, vorzugsweise aus den Aufnahmeelementen herausnehmbar, insbesondere herausziehbar sind, ist es möglich, das im ersten und zweiten Schritt ausgewählte Zahnmuster aus dem ersten Aufnahmeelement herauszunehmen und neben die Zahnmuster des zweiten Aufnahmeelements zu halten, um diese besser vergleichen zu können. Ferner ist es durch das Herausnehmen der einzelnen Zahnmuster möglich, diese unmittelbar an den Zahn des Patienten zu halten.

Das erste Ausführungsbeispiel ist vorzugsweise derart weitergebildet, dass zur weiteren Vereinfachung des ersten Schritts, d. h. zur Bestimmung der Helligkeit ein zusätzliches, drittes Aufnahmeelement vorgesehen ist. Dieses Aufnahmeelement weist Zahnmuster unterschiedlicher Helligkeit auf, wobei vorzugsweise je Helligkeitsstufe nur ein Zahnmuster vorgesehen ist. Hierbei weisen vorzugsweise sämtliche in dem dritten Aufnahmeelement angeordnete Zahnmuster den identischen Farbton, insbesondere einen mittleren Farbton und/oder ein identisches Chroma, insbesondere ein mittleres Chroma auf. Nach Bestimmung der Helligkeit mit Hilfe des dritten Aufnahmeelements erfolgt sodann, wie vorstehend beschrieben, das Bestimmen des Chromas und des Farbtons.

Erfindungsgemäß ist das dritte Aufnahmeelement, das insbesondere je Helligkeitsstufe nur ein Zahnmuster aufweist, mit einem vierten Aufnahmeelement zu einem Bereitstellungssystem kombiniert. Hierbei weist das vierte Aufnahmeelement mehrere Helligkeitsgruppen an Zahnmustern auf, wobei die Zahnmuster in jeder Gruppe, in ein Zahnmuster identischer Helligkeit zusammengefasst sind. Vorzugsweise ist innerhalb einer derartigen HeLligkeitsgruppe eine Reihenfolge der Zahnmuster hinsichtlich des Chromas und des Farbtons definiert.

In einem weiteren Ausführungsbeispiel sind entsprechend den anderen Ausführungsbeispielen mehrere Aufnahmeelemente vorgesehen, in denen mehrere Zahnmuster ausschließlich linear, d. h. nebeneinander angeordnet sind. Ein, zur Vermeidung von Verwechslungen hier als fünftes Aufnahmeelement bezeichnetes Aufnahmeelement, weist mehre Gruppen an Zahnmustern auf, wobei innerhalb jeder Gruppe das Chroma der Zahnmuster identisch ist. Vorzugsweise weisen sämtliche Gruppen den identischen, insbesondere den mittleren Farbton auf, Innerhalb jeder Gruppe variieren die Helligkeiten der Zahnmuster, wobei diese vorzugsweise von hell nach dunkel sortiert sind. Ein zweites Aufnahmeelement bei diesem Ausführungsbeispiel, entspricht dem anhand des ersten Ausführungsbeispiels beschriebenen zweiten Aufnahmeelement zur Bestimmung des Farbtons.

Nachfolgend wird die Erfindung näher erläutert.

Es zeigen:
- Figur 1 - 3: eine schematische Draufsicht des Produkts VITA Toothguide 3D-Master nach dem Stand der Technik,
- Figur 4: eine schematische Draufsicht eines ersten Ausführungsbeispiels des Bereitstellungssystems, welches nicht Teil der Erfindung ist,
- Figur 5: eine schematische Draufsicht einer Erweiterung des ersten Ausführungsbeispiels,
- Figur 6: eine schematische Draufsicht einer erfindungsgemäßen Ausführungsform des Bereitstellungssystems,
- Figur 7: eine schematische Draufsicht eines weiteren Ausführungsbeispiels des Bereitstellungssystems.

Bei einem ersten Ausführungsbeispiel (Fig. 4) des Bereitstellungssystems ist ein erstes Aufnahmeelement 20 sowie ein zweites Aufnahmeelement 22 vorgesehen, Die im Wesentlichen quaderförmigen Aufnahmeelemente 20, 22 weisen Einschubschlitze 24 auf, die an einer Oberseite 26 offen sind. In die Einschubschlitze 24 sind Musterstifte 28 herausziehbar eingesteckt, wobei jeder Musterstift 28 ein Zahnmuster 30 trägt. Sämtliche Zahnmuster 30 unterscheiden sich untereinander entweder in der Helligkeit, dem Chroma und/ oder dem Farbton.

Beim ersten Ausführungsbeispiel (Fig. 4) weist das erste Aufnahmeelement mehrere Gruppen mit den Ziffern 0 - 5 auf, Innerhalb jeder Gruppe weisen die Zahnmuster 30 dieselbe Helligkeit, d. h. die Helligkeit 0, 1, 2, 3, 4 oder 5 auf. In dem dargestellten Ausführungsbeispiel weisen sämtliche Zahnmuster, die in dem ersten Aufnahmeelement 20 angeordnet sind, denselben Farbton M auf. Innerhalb der einzelnen Helligkeitsgruppen 0 - 5 weisen die Zahnmuster 30 unterschiedliche Chroma, 1,2 oder 3 auf. Hierbei handelt es bei den Farben OM1 - OM3 um Farben, die außerhalb des natürlich Zahnfarbraums liegen und durch Bleichen von Zähnen entstehen.

Das zweite Aufnahmeelement 22 weist sechs unterschiedliche Gruppen 32 an Zahnmustern auf, die im dargestellten Ausführungsbeispiel jeweils zwei Zahnmuster 30 umfassen. Jede einzelne Gruppe 32 weist Zahnmuster eines identischen Farbtons, entweder des Farbtons L oder des Farbtons R auf, Innerhalb der einzelnen Gruppen 32 weisen die Farbmuster ferner dieselbe Helligkeit auf, wobei jeweils zwei Gruppen 32 zu einer Hauptgruppe 34 zusammengefasst werden können, so dass innerhalb der Hauptgruppe 34 dieselben Heiligkeiten vorgesehen sind. Innerhalb der einzelnen Gruppen 32 weisen die Zahnmuster 30 ein unterschiedliches Chroma auf, wobei im dargestellten Ausführungsbeispiel, Zwischenstufen 1,5 und 2,5 dargestellt sind,

Zur Auswahl der Helligkeit, des Chromas und des Farbtons wählt ein Zahnarzt oder Zahntechniker unter Zuhilfenahme des ersten Aufnahmeelements 20 zunächst eine der Helligkeitsstufen 1-5 aus. Sodann wählt der Zahnarzt innerhalb der Helligkeitsstufe das Chroma 1, 2 oder 3 aus. Anschließend erfolgt unter Zuhilfenahme des zweiten Aufnahmeelements 22 die Auswahl des Farbtons, wobei hierzu jeweils eine der Hauptgruppen 34, in Abhängigkeit der zuvor abgestimmten Helligkeit benutzt wird. Gegebenenfalls kann das Aufnahmeelement 22 in mehrere Teil-Aufnahmeelemente unterteilt werden, wobei jedes einzelne Teil-Aufnahmeelement vorzugsweise eine Hauptgruppe 34 umfasst. Dies vereinfacht die Handhabung, da sodann zur Bestimmung des Farbkomplexes nur das entsprechende Teil-Aufnahmeelement benötigt wird.

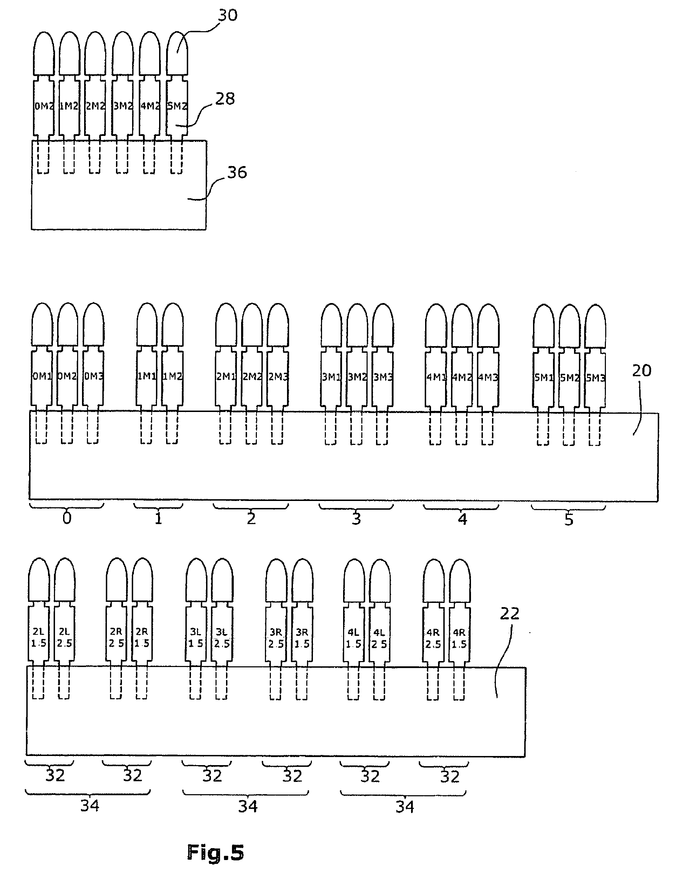

Bei der in Fig. 5 dargestellten Erweiterung des ersten Ausführungsbeispiels ist zusätzlich zu den Aufnahmeelementen 20, 22 ein drittes Aufnahmeelement 36 vorgesehen. Das dritte Aufnahmeelement 36 umfasst in dem dargestellten Ausführungsbeispiel sechs Musterstifte 28, die jeweils ein Zahnmuster 30 tragen. Die sechs Zahnmuster unterscheiden sich ausschließlich in der Helligkeit und sind nach Helligkeitsstufen 0 - 5 linear nebeneinander angeordnet. Um die Bestimmung der Helligkeit möglichst exakt vornehmen zu können, weisen die sechs Zahnmuster das identische Chroma 2, sowie den identischen Farbton M auf.

In einem der anhand Fig. 4 beschriebenen Schritte vorgelagerten Schritt, bestimmt der Zahnarzt oder Zahntechniker unter Zuhilfenahme des dritten Aufnahmeelements 36 somit zuerst die Helligkeit. Anschließend kann unter Zuhilfenahme der entsprechenden Helligkeitsgruppe 0 - 5, mit Hilfe des ersten Aufnahmeelements 20 das Chroma bestimmt werden. Hierbei kann bei dem in Fig. 5 dargestellten Ausführungsbeispiel das Aufnahmeelement 20 in mehrere Teil-Aufnahmeelemente unterteilt werden, wobei jedes Teil-Aufnahmeelement sodann eine Helligkeitsgruppe umfasst.

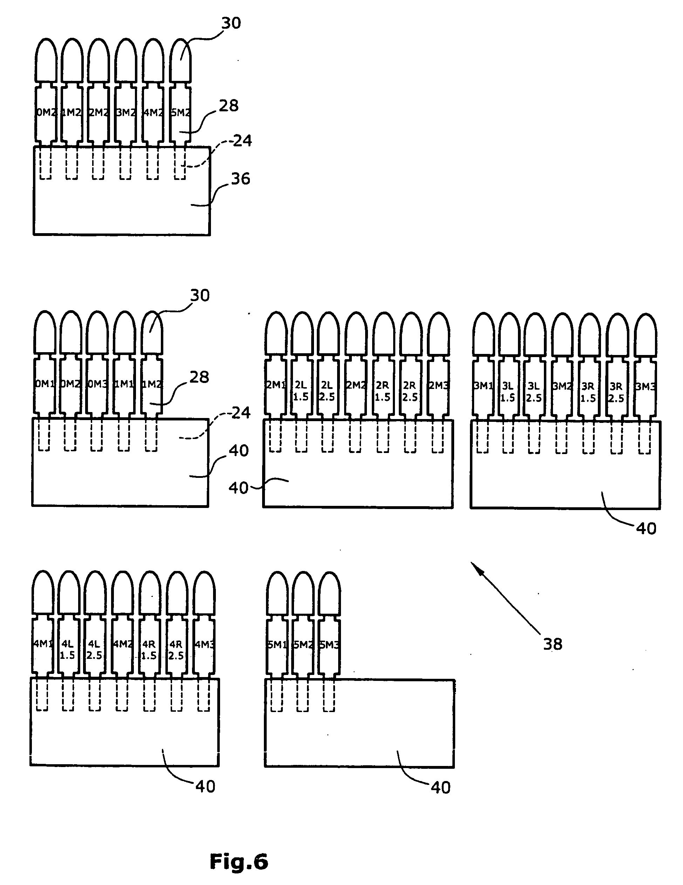

Beim erfindungsgemäßen Bereitstellungssystem (Fig. 6) sind entsprechend der anhand Fig. 4 und 5 beschriebenen Ausführungsbeispiele wiederum einzelne Musterstifte 28, die jeweils Zahnmuster 30 tragen, in Aufnahmeelemente eingesteckt und aus diesen herausnehmbar. Zur Durchführung der Helligkeitsbestimmung ist bei der in Fig. 6 dargestellten Ausführungsform des Bereitstellungssystems das dritte Aufnahmeelement 36 entsprechend dem in Fig. 5 beschriebenen Bereitstellungssystem vorgesehen.

Das bei dieser Ausführungsform vorgesehene weitere Aufnahmeelement, das vierte Aufnahmeelement 38, ist im dargestellten Ausführungsbeispiel in mehrere Teil-Aufnahmeelemente 40 unterteilt. Jedes einzelne Teil-Aufnahmeelement 40 weist eine Gruppe an Zahnmustern 30 auf. Mit Ausnahme der ersten Gruppe, in der die beiden Helligkeiten 0 und 1 zusammengefasst sind, weist jede Gruppe ausschließlich Zahnelemente derselben Helligkeitsstufe auf. Innerhalb der Helligkeitsstufe sind Zahnmuster mit unterschiedlichem Chroma und unterschiedlichen Farbtönen angeordnet. Diese sind in der Ausführungsform sortiert, wobei zwischen den Zahnmustern 30 mit dem Chroma 1, 2 oder 3 jeweils die Farbtöne L ader R angeordnet sind. Im dargestellten Ausführungsbeispiel sind hierbei jeweils zwei Zahnmuster 30 des Farbtons L bzw. des Farbtons R vorgesehen, die sodann einen Wert des Zwischenchromas, nämlich 1,5 und 2,5 aufweisen.

Eine Ausnahme stellt die erste Gruppe dar, in der die Farbtöne L und R nicht vorgesehen sind. Diese Gruppe weist ausschließlich eine Zusammenfassung von Zahnmustern der Helligkeit 0 und 1, in Verbindung mit unterschiedlichem Chroma, auf. Hierbei ist zu berücksichtigen, dass der natürliche Zahnfarbraum im Bereich der mittleren Helligkeit die größte Ausdehnung hat. Im Bereich sehr hoher und sehr niedriger Helligkeiten ist er enger. Zudem treten die mittleren Helligkeiten häufiger auf, sehr hohe und sehr niedrige Helligkeiten sind deutlich seltener. Daher stellen bei der 1er- und 5er-Helligkeitsgruppe die M-Farben einen ausreichenden Kompromiss dar. Die "1M3" liegt außerhalb des natürlichen Zahnfarbraums. Eine weitere Ausnahme stellt die letzte Gruppe, die Helligkeitsstufe 5 dar. Hier sind ebenfalls keine Zahnmuster in unterschiedlichen Farbtönen enthalten.

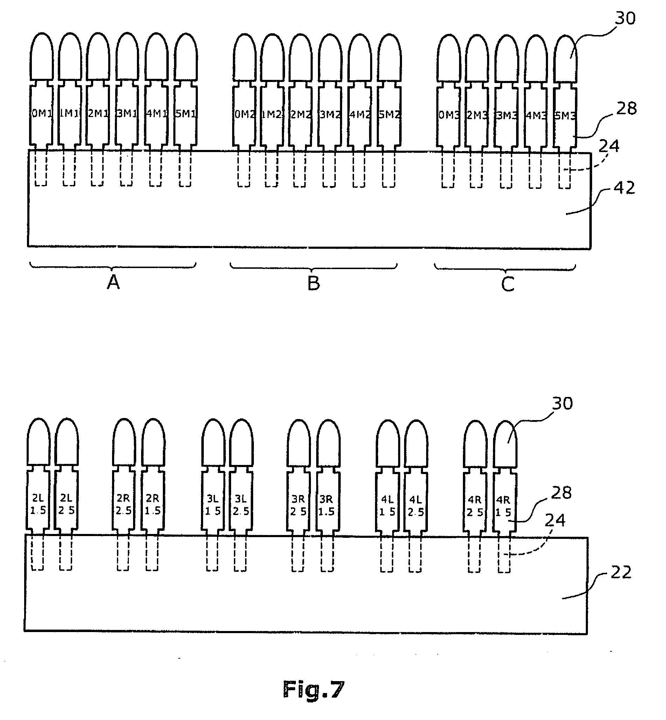

Auch bei dem weiteren Ausführungsbeispiel (Fig. 7) sind die einzelnen Musterstifte 28, die jeweils ein einzelnes Zahnmuster 30 tragen, in Einschubschlitze 24 eingesteckt.

Bei diesem Ausführungsbeispiel des Bereitstellungssystems sind wiederum zwei Aufnahmeelemente vorgesehen. Das zunächst verwendete Aufnahmeelement ist das fünfte Aufnahmeelement 42. Das Aufnahmeelement trägt mehrere Gruppen an Zahnmustern, wobei innerhalb der einzelnen Gruppen A, B, C die Zahnmuster desselben Chroma 1, 2, 3 aufweisen. Innerhalb der einzelnen Gruppen A, B, C weisen die Zahnmuster 30 unterschiedliche Helligkeitsstufen 0 - 5 auf. Sämtliche Zahnmuster des fünften Aufnahmeelements 42 weisen denselben mittleren Farbton auf. Mit Hilfe des fünften Aufnahmeelements 42 wird somit die Helligkeit und das Chroma bestimmt. Hierbei ist es dem Zahnarzt oder Zahntechniker überlassen, ob er zuerst die Helligkeit oder zuerst das Chroma bestimmt. Beispielsweise kann er zuerst das Chroma bestimmen, d. h. eine der Gruppen A, B, C auswählen und sodann innerhalb der entsprechenden Gruppe die Helligkeit festlegen. Ebenso ist es möglich, beispielsweise mit der mittleren Chromagruppe B, zunächst die Helligkeit 0 - 5 zu bestimmen und sodann zu überprüfen, ob das Chroma der Stufe 1 oder 3 passender ist.

Bei dem in diesem Ausführungsbeispiel des Bereitstellungssystems vorgesehenen weiteren Aufnahmeelement handelt es sich um das Aufnahmeelement 22 (Fig. 4).

## Patentansprüche

1. Bereitstellungssystem für Zahnmuster zur Bestimmung der Helligkeit, des Chromas und des Farbtons von natürlichen und/ oder gebleichten Zähnen, mit
mehreren Aufnahmeelementen (36, 38), in denen mehrere Zahnmuster (30) linear einreihig angeordnet sind,
wobei ein erstes Aufnahmeelement (36) mit Zahnmustern unterschiedlicher Helligkeit vorgesehen ist und
wobei ein zweites Aufnahmeelement (38) mehrere Gruppen an Zahnmustern aufweist und jede Gruppe Zahnmuster mit identischer Helligkeit, aber unterschiedlichem Farbton und unterschiedlichem Chroma aufweist.

2. Bereitstellungssystem nach Anspruch 1, **dadurch gekennzeichnet, dass** das zweite Aufnahmeelement (38) drei Gruppen aufweist und innerhalb der Gruppen die Zahnmuster (30) sortiert angeordnet sind.

3. Bereitstellungssystem nach einem der Ansprüche 1 oder 2 **dadurch gekennzeichnet, dass** im ersten Aufnahmeelement (36) je Helligkeitsstufe nur ein Zahnmuster (30) vorgesehen ist.

4. Bereitstellungssystem nach einem der Ansprüche 1-3, **dadurch gekennzeichnet, dass** im ersten Aufnahmeelement (36) sämtliche Zahnmuster (30) einen identischen mittleren Farbton aufweisen.

5. Bereitstellungssystem nach einem der Ansprüche 1-4, **dadurch gekennzeichnet, dass** im ersten Aufnahmeelement (36) die Zahnmuster (30) ein identisches mittleres Chroma aufweisen.

6. Bereitstellungssystem nach einem der Ansprüche 1-5, **dadurch gekennzeichnet, dass** das zweite Aufnahmeelement (38) in Teil-Aufnahmeelemente (40) unterteilt ist, wobei jedes Teil-Aufnahmeelement (40) insbesondere eine Gruppe an Zahnmustern (30) aufweist.

## Claims

1. A supply system for tooth samples for the determination of the brightness, the chroma and/or the shade of natural and/or bleached teeth, comprising
a plurality of receiving elements (36, 38) for a linear arrangement of a plurality of tooth samples (30) in one row,
wherein a first receiving element (36) comprises tooth samples of different degrees of brightness, and
wherein a second receiving element (38) comprises a plurality of groups of tooth samples and each group includes tooth samples of identical brightness, but different shade and/or different chroma.

2. The supply system of claim 1, **characterized in that** the second receiving element (38) comprises three groups, and that the tooth samples (30) are sorted within the groups.

3. The supply system of one of claims 1 or 2, **characterized in that** the first receiving element (36) includes only one tooth sample (30) per degree of brightness.

4. The supply system of one of claims 1 - 3, **characterized in that** in the first receiving element (36) all tooth samples (30) have an identical medium shade.

5. The supply system of one of claims 1 - 4, **characterized in that** in the first receiving element (36) the tooth samples (30) have an identical medium chroma.

6. The supply system of one of claims 1 - 5, **characterized in that** the second receiving element (38) is divided into sub-receiving elements (40), wherein each sub-receiving element (40) includes in particular one group of tooth samples (30).

## Revendications

1. Système de mise à disposition d'échantillons dentaires pour déterminer la luminosité, le chroma et la teinte de dents naturelles et/ou blanchies, comprenant
plusieurs éléments de réception (36, 38) dans lesquels plusieurs échantillons dentaires (30) sont arrangés linéairement en une rangée,
un premier élément de réception (36) avec échantillons dentaires de luminosités différentes étant prévu, et
un deuxième élément de réception (38) comprenant plusieurs groupes d'échantillons dentaires, et chaque groupe comprenant des échantillons dentaires de luminosité identique, mais avec teintes différentes et avec des chromas différents.

2. Système de mise à disposition selon la revendication 1, **caractérisé en ce que** le deuxième élément de réception (38) comprend trois groupes, et que les échantillons dentaires (30) sont arrangés de manière triée dans les groupes.

3. Système de mise à disposition selon les revendications 1 ou 2, **caractérisé en ce qu'**un seul échantillon dentaire (30) est prévu dans ledit premier élément de réception (36) par dégrée de luminosité.

4. Système de mise à disposition selon l'une des revendications 1-3, **caractérisé en ce que** tous les échantillons dentaires (30) dans ledit premier élément de réception (36) ont une demi-teinte identique.

5. Système de mise à disposition selon l'une des revendications 1-4, **caractérisé en ce que** les échantillons dentaires (30) dans ledit premier élément de réception (36) ont un chroma moyen identique.

6. Système de mise à disposition selon l'une des revendications 1-5, **caractérisé en ce que** le deuxième élément de réception (38) est divisé en sous-éléments de réception (40), chaque sous-élément de réception (40) comprenant en particulier un groupe d'échantillons dentaires (30).
